(19) Europäisches Patentamt
European Patent Office
Office européen des brevets

(11) **EP 1 985 823 B1**

(12) **FASCICULE DE BREVET EUROPEEN**

(45) Date de publication et mention
de la délivrance du brevet:
**16.06.2010 Bulletin 2010/24**

(51) Int Cl.:
**F02C 7/32** *(2006.01)*    **H02K 7/18** *(2006.01)*

(21) Numéro de dépôt: **08155204.4**

(22) Date de dépôt: **25.04.2008**

(54) **Dispositif de production d'énergie électrique dans un moteur à turbine à gaz à double corps**

Vorrichtung zur Erzeugung von elektrischer Energie in einer Zweiwellen-Fluggasturbine

Device for producing electric energy in a twin-shaft gas turbine engine

(84) Etats contractants désignés:
**DE FR GB**

(30) Priorité: **27.04.2007 FR 0703105**

(43) Date de publication de la demande:
**29.10.2008 Bulletin 2008/44**

(73) Titulaire: **SNECMA**
**75015 Paris (FR)**

(72) Inventeurs:
• **Colin, Antoine**
  **91800 Brunoy (FR)**
• **Lebrun, Arnaud**
  **77123 Noisy sur Ecole (FR)**
• **Barjon, Gilles**
  **77300 Fontainbleau (FR)**

(74) Mandataire: **David, Daniel et al**
**Bloch & Bonnétat**
**23bis, rue de Turin**
**75008 Paris (FR)**

(56) Documents cités:
**GB-A- 759 606       GB-A- 2 197 392**
**US-A1- 2006 012 180**

EP 1 985 823 B1

## Description

La présente invention concerne le domaine des moteurs à turbine à gaz multicorps utilisés en aéronautique. Elle vise l'entraînement des machines électriques auxiliaires par les arbres du moteur.

Dans les turbomoteurs propulsant les aéronefs, on dérive une partie de l'énergie produite pour entraîner des équipements auxiliaires assurant les servitudes à la fois des moteurs eux-mêmes et de l'aéronef. Ces équipements comprennent les systèmes de lubrification et de carburant, et l'alimentation des systèmes hydrauliques et électriques.

Un moteur à turbine à gaz multi corps comprend au moins deux corps tournants ; la majorité est à double ou à triple corps, mais un nombre plus élevé n'est pas exclu. Un corps est constitué d'un ensemble solidaire tournant autour d'un axe, avec une section formant compresseur et une section formant turbine, cette dernière entraînant le compresseur. Plus particulièrement un moteur multi corps peut être aussi multiflux, généralement à double flux, et comprendre une soufflante engendrant un flux froid, dit secondaire, bipassant le noyau central comprenant la chambre de combustion et traversé par le flux chaud dit primaire. Le moteur peut aussi être de type turbopropulseur entraînant une hélice.

Généralement, la totalité de la puissance mécanique nécessaire à l'entraînement des machines auxiliaires est prélevée sur le corps à haute pression HP par l'intermédiaire d'une boîte à engrenages connue sous le sigle IGB pour Inlet Gear Box puis transmise aux équipements situés sur le carter de la soufflante par un arbre, disposé radialement par rapport à l'arbre moteur, en prise avec un train d'engrenages formant le boîtier les supportant et désigné sous le sigle AGB pour Auxiliary Gear Box.

La tendance actuelle est d'augmenter l'alimentation en énergie électrique pour les accessoires. La fourniture d'une puissance mécanique augmentée tout en maintenant l'opérabilité de la turbomachine dans l'ensemble de son domaine de vol nécessite de trouver une autre solution. Une solution consiste à répartir le prélèvement sur l'ensemble des corps tournants, c'est-à-dire les corps HP et BP dans un moteur à double corps.

Par ailleurs, alors que les moteurs à turbine à gaz étaient mis en route classiquement par entraînement du rotor HP au moyen d'une turbine à air, on vise à remplacer cette dernière par un moteur électrique. En fait, on cherche à mettre à profit l'augmentation des besoins en puissance des générateurs électriques pour utiliser ces derniers de façon réversible en moteur électrique. Cette solution est rendue possible par le fait que la puissance des machines électriques installées est suffisante pour mettre en rotation le corps tournant du moteur.

On cherche plus particulièrement à réaliser un moyen permettant de répartir la prise de puissance sur les corps HP et BP pour générer l'énergie électrique. On utilise alors plusieurs machines électriques : une machine est entraînée par le corps HP et une autre par le corps BP. Cette technique nécessite cependant un traitement des signaux électriques pour pouvoir sommer leurs puissance. Les machines peuvent être situées sur les axes des moteurs ou bien au niveau d'une boîte relais. Une telle solution présente l'inconvénient d'une certaine lourdeur et d'un encombrement certain.

On a prévu dans une solution, telle que celle dont une demande de brevet a été déposée par la demanderesse sous le numéro FR 2 863 312, d'intégrer une ou plusieurs machines électriques au niveau du boîtier AGB sur le carter à l'extérieur du moteur et de l'entraîner au moyen d'un engrenage différentiel pour répartir la prise de puissance entre les deux corps, HP d'une part et BP d'autre part. On note qu'une telle solution ne permet pas l'entraînement des rotors au démarrage par l'une des machines électriques.

Un dispositif analogue avec toutes les caractéristiques du préambule de la revendication 1 est décrit dans la demande britannique GB2197392, qui divulgue une machine électrique à deux rotors entraînés respectivement par le corps BP et le corps HP. Le document US2006/012180 décrit par ailleurs une machine dynamométrique servant à la fois de générateur électrique et de démarreur.

La présente invention a pour but de réaliser le prélèvement de puissance de manière à ce qu'il puisse être réparti en fonction des besoins sur les différents corps tournants d'un turbomoteur multi-corps.

Un autre objet de l'invention est de permettre l'entraînement par les mêmes moyens d'au moins un des corps tournants pendant le démarrage du turbomoteur.

Conformément à l'invention, on réalise un dispositif de production d'énergie électrique dans un moteur à turbine à gaz multi-corps comportant au moins un premier corps tournant, par exemple à basse pression, et un deuxième corps tournant, par exemple à haute pression, et entraînant une machine électrique, de type bi-rotor avec un premier rotor et un second rotor, le premier rotor étant relié mécaniquement au premier corps tournant et le second rotor étant relié mécaniquement au deuxième corps tournant, la machine électrique étant réversible, susceptible de fonctionner en générateur électrique lorsqu'au moins l'un des rotors est entraîné par le corps tournant auquel il est relié ou bien de fonctionner en moteur d'entraînement d'au moins l'un des corps tournants, caractérisé par le fait que la transmission mécanique entre le premier rotor et le premier corps tournant comprend un frein par lequel le premier corps tournant peut être maintenu immobile.

La solution de l'invention présente l'avantage de permettre de répartir le prélèvement de puissance mécanique entre les deux corps tournants sans avoir recours à un système d'embrayage ou de boîte de vitesse qui aurait un impact sur la masse du turbomoteur.

En outre l'opérabilité du turbomoteur est assurée par une répartition du prélèvement de puissance cohérente entre les deux corps tournants. Cette répartition est pilotée par des rapports de réduction adaptés.

Dans le cas d'un moteur à double corps, il a été montré que favoriser le prélèvement de la puissance sur le corps BP permettait de réduire la consommation spécifique d'un turbomoteur.

Selon un mode de réalisation, les rotors sont reliés mécaniquement chacun aux corps tournants par des réducteurs de vitesse. Selon un autre mode de réalisation, ils sont montés en direct sur le moteur.

La transmission mécanique entre le premier rotor de la machine électrique et le premier corps tournant du turbomoteur peut comprendre un frein, par exemple une roue à cliquet anti retour, par lequel le dit premier corps tournant peut être maintenu immobile. Par exemple, dans le cas d'un turbopropulseur à hélice, pour éviter que l'hélice ne soit entraînée par le vent lorsque le moteur est arrêté, on est amené à bloquer la rotation du corps BP auquel l'hélice est reliée. Le frein décrit dans la présente invention permet de réaliser cette fonction supplémentaire.

Cependant un tel frein n'est pas nécessaire dans le cas où le rapport des inerties entre les corps HP et BP est très important, comme c'est le cas pour les gros moteurs.

Avantageusement le premier rotor de la machine électrique est concentrique et intérieur au second rotor de celle-ci. De préférence le premier rotor est à aimants permanents ; on réduit ainsi les contacts entre pièces fixes et rotatives.

L'invention porte aussi sur un moteur à turbine à gaz à double corps comprenant au moins une telle machine électrique auxiliaire. De préférence le moteur à turbine à gaz est de type à double corps, le premier corps est le corps à basse pression et le second corps est à haute pression.

Éventuellement les corps tournants sont contrarotatifs.

Cette disposition permet d'appliquer une méthode de démarrage d'un moteur à turbine à gaz, consistant à alimenter la machine électrique auxiliaire en énergie électrique tout en maintenant le frein serré de façon à entraîner le deuxième corps tournant seul pendant la phase de démarrage.

Par ce mode de fonctionnement, il est possible de supprimer tout le système de transmission (AGB, boîte d'engrenage de transfert désignée sous le sigle TGB, arbre radial et IGB) la turbine à air et de limiter l'utilisation de composants de transmission mécanique. Le gain en masse réalisé à ce niveau offre des possibilités d'intégration de la nouvelle structure.

On décrit ci-après l'invention plus en détail en référence aux dessins annexés sur lesquels :

La figure 1 représente de façon schématique un turboréacteur à double corps en coupe axiale ;
La figure 2 représente schématiquement une machine électrique de type bi-rotor ;
La figure 3 montre un exemple d'agencement des machines,
La figure 4 montre le fonctionnement en démarreur.

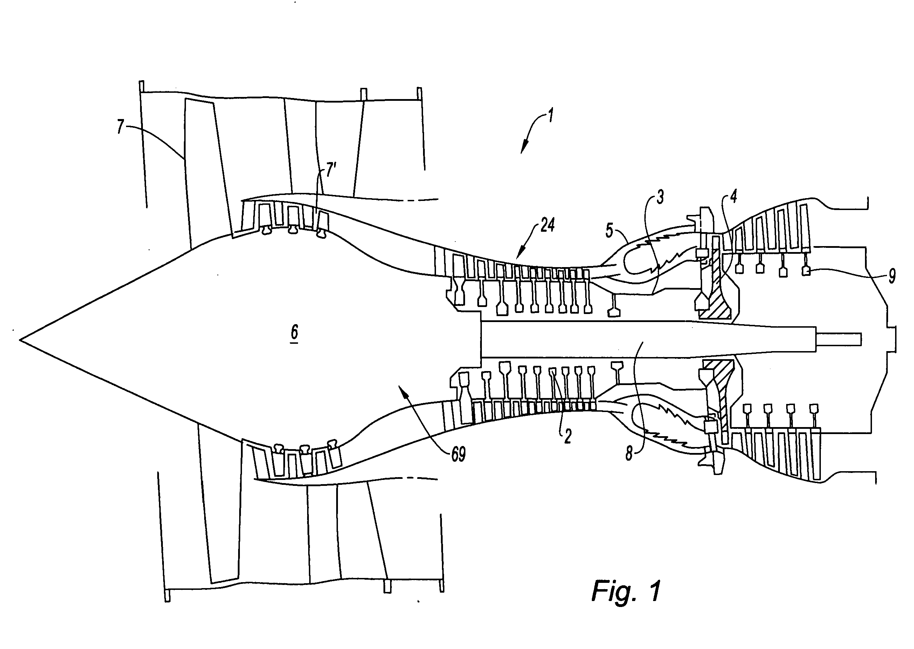

En se reportant tout d'abord à la figure 1, on voit la représentation schématique d'un turbomoteur agencé en turboréacteur 1. Il est à double corps avec un corps 24 à haute pression HP comprenant un rotor de compresseur HP 2 relié par un premier arbre 3 à un rotor de turbine HP 4. Une chambre de combustion 5 est ménagée entre les deux rotors HP. Le corps à basse pression 69 comprend un ensemble compresseur BP 6, avec la soufflante 7 et les premiers étages 7' de compression, disposé en amont du compresseur HP. L'ensemble compresseur BP est relié par un arbre 8 concentrique au premier arbre à un rotor de turbine BP 9, disposé en aval du rotor de turbine HP 4. La soufflante délivre un flux d'air qui est divisé en deux flux concentriques, un flux primaire qui traverse les différents modules BP et HP avant d'être éjecté dans l'atmosphère, et un flux secondaire froid qui bipasse la chambre de combustion et est éjecté dans l'atmosphère. Dans les moteurs civils modernes, le taux de dilution, qui est le rapport entre les flux primaire et secondaire, est élevé ; il est d'au moins 4 et est amené dans le futur à être encore plus élevé. Au lieu d'entraîner une soufflante le moteur peut fonctionner en turbopropulseur et entraîner une ou plusieurs hélices.

Une machine électrique est classiquement composée d'un rotor inducteur et d'un stator formant l'induit. Le rotor est pourvu d'une pluralité de paires de pôles, par exemple 2, 3 ou 4 paires de pôles, et le stator formant l'induit, est pourvu de bobinages. Conformément à l'invention on utilise dans l'application considérée, une machine électrique à stator tournant et formant un deuxième rotor, chacun des rotors de la machine électrique étant relié mécaniquement à un corps tournant du turbomoteur multi-corps.

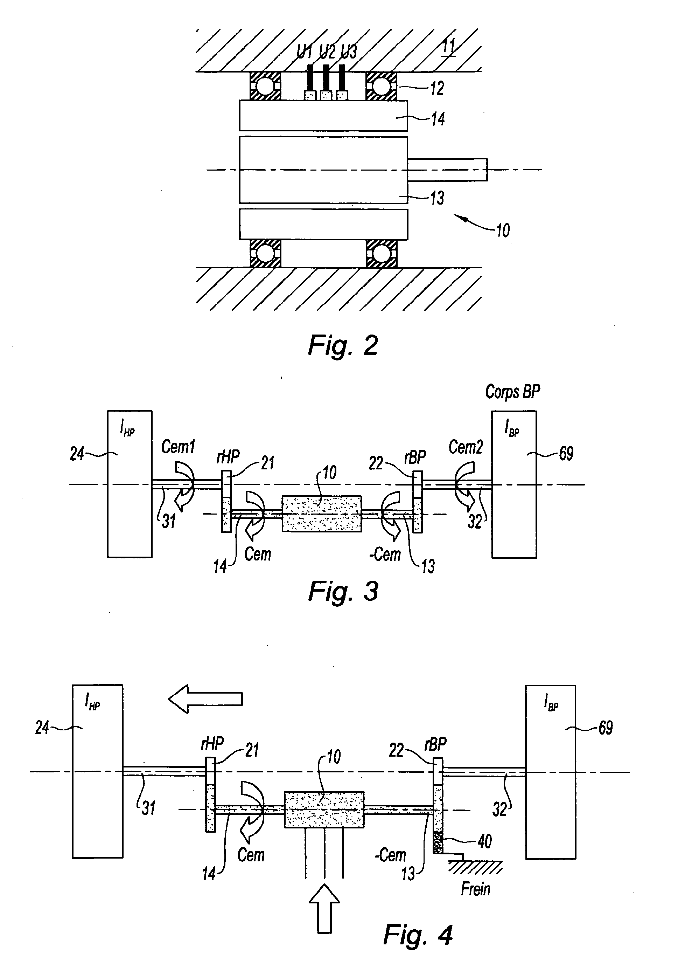

Sur la figure 2, on a représenté de façon schématique une machine électrique du type à deux rotors. La machine 10 est montée sur une partie fixe 11 du moteur à turbine à gaz par l'intermédiaire de paliers 12. Ces derniers supportent deux rotors concentriques 13 et 14 tournant autour du même axe XX. Il s'agit d'un premier rotor inducteur 13, de préférence à aimants permanents pour éviter dans la mesure du possible les liens électriques tournants entre les parties mobile et fixe. Il est supporté par des paliers non représentés et est disposé à l'intérieur du second rotor 14, bobiné et pourvu, ici sur sa surface extérieure, de collecteurs à balais, U1, U2, U3 dans le cas d'un moteur triphasé. Le premier rotor 13 est de préférence relié mécaniquement au corps tournant 69 à basse pression BP. Le second rotor est quant à lui relié mécaniquement au corps tournant à haute pression HP. Il est à noter que dans un moteur à turbine à gaz comportant plus de deux corps tournants l'un des rotors peut être relié mécaniquement à un corps à un niveau de pression intermédiaire.

Compte tenu de ces considérations de fond, la disposition de la machine par rapport aux corps tournant du moteur peut varier.

Selon un mode de réalisation, la machine électrique est disposée le long ou à proximité de l'axe du moteur à turbine à gaz. Le premier rotor 13 est alors avantageusement relié au corps BP 69 et le deuxième rotor 14 est relié au corps HP 24. Afin de permettre un entraînement à des vitesses convenables pour la machine électrique 10, ses deux rotors sont reliés aux deux corps tournants par des réducteurs de vitesse appropriés. On a représenté sur la figure 3 le schéma de principe de cette disposition. La machine électrique 10 est montrée avec les deux arbres des rotors 13 et 14. Ces deux arbres 13 et 14 sont reliés par des réducteurs 21 et 22, respectivement HP et BP aux arbres 31 et 32 des corps HP 24 et BP 69 respectivement. Selon cet exemple les deux corps du moteur à turbine à gaz sont contrarotatifs avec des réducteurs appropriés. La solution convient également aux cas où les corps tournants sont corotatifs avec des réducteurs appropriés. Les réducteurs mis en place sont chargés d'une part d'assurer une répartition de prélèvement de puissance permettant de remplir les conditions d'opérabilité et d'autre part de faire en sorte que la machine électrique ait une vitesse du type :

$$\Omega = r_{BP}.\ \Omega_{BP} + r_{HP}.\ \Omega_{HP}$$

.

La machine électrique présente l'avantage de permettre l'entraînement des corps tournants au moment du démarrage du turbomoteur.

Dans ce but, notamment pour les moteurs qui ne sont pas de grandes dimensions, on prévoit un frein 40 qui permet de répartir convenablement la puissance d'entraînement entre les deux corps tournants. Ce frein est disposé de manière à assurer le blocage du corps BP. En effet, il est à noter que pour les gros moteurs où le corps basse pression possède une inertie très importante par rapport au corps haute pression, par exemple de l'ordre de 10 fois supérieure, l'utilisation d'un frein peut être évitée, car le corps HP démarre avant le corps BP. Dans les moteurs de plus faibles dimensions la différence d'inertie est aussi plus faible ; le frein est alors utile.

Sur la figure 4, l'agencement de l'invention est représenté de façon à fonctionner en mode démarrage. De l'énergie électrique est fournie à la machine 10 qui est commandée pour fonctionner en moteur électrique. Le frein 40 est serré de façon à immobiliser le corps tournant BP 69. Dans ce cas le rotor 14 relié au corps tournant HP 24 est mis en rotation et entraîne le corps HP 24 du turbomoteur 1. Toute la puissance développée par la machine électrique est ainsi absorbée par le corps HP 24

Lorsque le corps HP 24 a atteint une vitesse déterminée, on libère le frein 40 du corps BP 69. La puissance électrique fournie à la machine 10 se répartit alors entre les deux corps tournants, le corps BP est entraîné à son tour. L'allumage est effectué lorsque les conditions thermodynamiques d'allumage sont atteintes.

Lorsque le turbomoteur est autonome en rotation, on interrompt l'alimentation en énergie électrique de la machine électrique 10. Les rotors sont entraînés mécaniquement ; la machine 10 fonctionne en générateur électrique.

Selon une variante non représentée, la machine électrique est disposée sur le carter de la soufflante. Elle est montée sur le boîtier AGB comme dans les solutions conventionnelles de support et d'entraînement des machines auxiliaires. L'énergie mécanique est acheminée par le moyen de deux arbres radiaux disposés dans les bras du carter intermédiaire du moteur. Ces deux arbres radiaux sont reliés mécaniquement, respectivement, à chacun des corps tournants.

Selon une variante non représentée, la machine électrique est disposée dans l'axe principal du moteur, par exemple dans le carter intermédiaire entre les compresseur BP et HP. Les rotors sont entraînés directement par les parties HP et BP du moteur dans le cas où lesdites parties HP et BP sont co-rotatives ou au travers d'un système inverseur du sens de rotation dans le cas ou lesdites parties HP et BP sont contrarotatives.

**Revendications**

1. Dispositif de production d'énergie électrique dans un moteur à turbine à gaz multi-corps comportant au moins un premier corps tournant (69), par exemple à basse pression, et un deuxième corps tournant (24), par exemple à haute pression, et entraînant une machine électrique (10) de type bi-rotor avec un premier rotor (13) et un second rotor (14), le premier rotor (13) étant relié mécaniquement au premier corps tournant (69) et le second rotor étant relié mécaniquement au deuxième corps tournant (24), la machine électrique (10) étant réversible, susceptible de fonctionner en générateur électrique lorsqu'au moins l'un des rotors (13, 14) est entraîné par le corps tournant (69 respectivement 24) auquel il est relié ou bien de fonctionner en moteur d'entraînement d'au moins l'un des corps tournants (24, 69), **caractérisé par le fait que** la transmission mécanique entre le premier rotor (13) et le premier corps tournant (69) comprend un frein (40) par lequel le premier corps tournant (69) peut être maintenu immobile.

2. Dispositif selon la revendication précédente dont les rotors (13, 14) sont reliés mécaniquement aux corps tournants (69, 24) par des réducteurs de vitesse (21, 22)

3. Dispositif selon la revendication 1 dont les rotors (13, 14) sont reliés mécaniquement aux corps tournants (69, 24) par entraînement direct.

**4.** Dispositif selon l'une des revendications précédentes dont le premier rotor (13) est concentrique et intérieur au second rotor (14).

**5.** Dispositif selon l'une des revendications précédentes dont le frein est constitué d'une roue à cliquet.

**6.** Dispositif selon l'une des revendications précédentes dont le premier rotor (13) est à aimants permanents.

**7.** Moteur à turbine à gaz à double corps comprenant au moins une machine électrique auxiliaire selon l'une des revendications précédentes.

**8.** Moteur à turbine à gaz selon la revendication précédente de type à double corps dont le premier corps est le corps à basse pression et le second corps est à haute pression.

**9.** Moteur à turbine à gaz selon la revendication 7 ou 8 dont les corps tournants sont contrarotatifs.

**10.** Méthode de démarrage d'un moteur à turbine à gaz selon l'une des revendications 7, 8 ou 9, consistant à alimenter la machine (10) en énergie électrique tout en maintenant le frein (40) serré de façon à entraîner le deuxième corps tournant (24) seul, jusqu'à atteindre une vitesse de rotation déterminée où le frein est libéré.

**Claims**

**1.** Device for producing electrical energy in a multi-body gas turbine engine comprising at least a first rotating body (69), for example a low-pressure body, and a second rotating body (24), for example a high-pressure body, and driving an electric machine (10) of the twin rotor type with a first rotor (13) and a second rotor (14), the first rotor (13) being mechanically connected to the first rotating body (69) and the second rotor being mechanically connected to the second rotating body (24), the electric machine (10) being reversible, able to operate as an electric generator when at least one of the rotors (13, 14) is driven by the rotating body (69 or respectively 24) to which it is connected or else to operate as a motor for driving at least one of the rotating bodies (24, 69), **characterised in that** the mechanical transmission between the first rotor (13) and the first rotating body (69) comprises a brake (40), by means of which the first rotating body (69) can be kept stationary.

**2.** Device according to the preceding claim, in which the rotors (13, 14) are mechanically connected to the rotating bodies (69, 24) by speed reducers (21, 22).

**3.** Device according to claim 1, in which the rotors (13, 14) are mechanically connected to the rotating bodies (69, 24) by direct drive.

**4.** Device according to one of the preceding claims, in which the first rotor (13) is concentric with and inside the second rotor (14).

**5.** Device according to one of the preceding claims, in which the brake consists of a ratchet wheel.

**6.** Device according to one of the preceding claims, in which the first rotor (13) is a permanent magnet rotor.

**7.** Double-body gas turbine engine comprising at least one auxiliary electric machine according to one of the preceding claims.

**8.** Gas turbine engine according to the preceding claim of the double-body type, in which the first body is the low-pressure body and the second body is the high-pressure body.

**9.** Gas turbine engine according to claim 7 or 8, in which the rotating bodies rotate in opposite directions.

**10.** Method of starting a gas turbine engine according to one of claims 7, 8 or 9, consisting in supplying the machine (10) with electrical energy while keeping the brake (40) applied so as to drive the second rotating body (24) alone until a given speed of rotation is reached, at which the brake is released.

**Patentansprüche**

**1.** Vorrichtung zum Erzeugen von elektrischer Energie in einem Mehrwellen-Gasturbinentriebwerk, umfassend mindestens eine erste Drehwelle (69), z.B. auf Niederdruck, und eine zweite Drehwelle (24), z.B. auf Hochdruck, und eine elektrische Maschine (10) von der Art mit Doppelläufer mit einem ersten Läufer (13) und einem zweiten Läufer (14), wobei der erste Läufer (13) mit der ersten Drehwelle (60) mechanisch verbunden ist und der zweite Läufer mit der zweiten Drehwelle (24) mechanisch verbunden ist, wobei die elektrische Maschine, da sie umkehrbar ist, in der Lage ist, als elektrischer Generator zu funktionieren, wenn mindestens einer der Läufer (13, 14) von der Drehwelle (69 bzw. 24) angetrieben wird, mit der er verbunden ist, oder als Antriebsmotor mindestens einer der Drehwellen (24, 69) zu funktionieren, **dadurch gekennzeichnet, dass** die mechanische Übertragung zwischen dem ersten Läufer (13) und der ersten Drehwelle (69) eine Bremse (40) umfasst, über welche die erste Drehwelle (69) angehalten werden kann.

2. Vorrichtung nach dem vorhergehenden Anspruch, wobei die Läufer (13, 14) mit den Drehwellen (69, 24) durch ein Untersetzungsgetriebe (21, 22) mechanisch verbunden sind.

3. Vorrichtung nach Anspruch 1, wobei die Läufer (13, 14) mit den Drehwellen (69, 24) getriebelos mechanisch verbunden sind.

4. Vorrichtung nach einem der vorhergehenden Ansprüche, wobei der erste Läufer (13) zu dem zweiten Läufer (14) konzentrisch und innengelegen ist.

5. Vorrichtung nach einem der vorhergehenden Ansprüche, wobei die Bremse aus einem Klinkenrad besteht.

6. Vorrichtung nach einem der vorhergehenden Ansprüche, wobei der erste Läufer (13) ein Dauermagnetläufer ist.

7. Doppelwellen-Gasturbinentriebwerk, umfassend mindestens eine elektrische Hilfsmaschine nach einem der vorhergehenden Ansprüche.

8. Gasturbinentriebwerk nach dem vorhergehenden Anspruch von der Art mit Doppelwelle, wobei die erste Welle eine Niederdruckwelle ist und die zweite Welle eine Hochdruckwelle ist.

9. Gasturbinentriebwerk nach Anspruch 7 oder 8, wobei die Drehwellen gegenläufig sind.

10. Verfahren zum Starten eines Gasturbinentriebwerks nach einem der Ansprüche 7, 8 oder 9, bestehend aus dem Versorgen der Maschine (10) mit elektrischer Energie, wobei die Bremse (40) festgestellt bleibt, um nur die zweite Drehwelle (24) anzutreiben, bis eine bestimmte Drehzahl erreicht ist, bei der die Bremse gelöst wird.

Fig. 1

**Fig. 2**

**Fig. 3**

**Fig. 4**

**EP 1 985 823 B1**

## RÉFÉRENCES CITÉES DANS LA DESCRIPTION

**Documents brevets cités dans la description**

- FR 2863312
- GB 2197392 A
- US 2006012180 A